# EUROPEAN PATENT SPECIFICATION

(11) **EP 2 805 328 B1**
(45) Date of publication and mention of the grant of the patent: **12.12.2018**
(21) Application number: 12700690.6
(22) Date of filing: 19.01.2012
(51) Int. Cl.: G11B 20/00, H04L 12/18, H04N 21/00

(54) **DISTRIBUTING CONTENT TO MULTIPLE RECEIVERS USING MULTICAST CHANNELS**
VERTEILUNG VON INHALTEN AN MEHRERE EMPFÄNGER ÜBER MULTICAST-KANÄLE
DISTRIBUTION DE CONTENU À DES RÉCEPTEURS MULTIPLES EN UTILISANT DES CANAUX DE MULTIDIFFUSION

(43) Date of publication of application: 26.11.2014
(73) Proprietor: Irdeto B.V., 2132 LS Hoofddorp (NL)
(72) Inventor: DOUMEN, Jeroen, NL-2132 LS Hoofddorp (NL)
(74) Representative: Boult Wade Tennant LLP
(86) International application number: PCT/EP2012/050774
(87) International publication number: WO 2013/107510

(56) References cited:
- US-A1- 2003 009 669
- US-A1- 2004 260 930
- US-A1- 2009 248 886
- PAUL JUDGE ET AL: "Security Issues and Solutions in Multicast Content Distribution: A Survey", IEEE NETWORK, IEEE SERVICE CENTER, NEW YORK, NY, US, vol. 17, no. 1, 1 January 2003 (2003-01-01), pages 30-36, XP011093529, ISSN: 0890-8044

## Description

### FIELD OF THE INVENTION

The present invention relates to methods and systems for distributing content to multiple receivers using multicast channels.

### BACKGROUND OF THE INVENTION

Digital watermarking of content is very well known. The content may comprise any type of digital data or digital signals, and may include one or more of audio data, image data, video data, textual data, multimedia data, a web page, software products, security keys, experimental data or any other kind of data. There are many methods for performing digital watermarking of content but, in general, they all involve adding a watermark to an item of content. This involves embedding, or adding, one or more watermark symbols (or a watermark codeword or payload data) into the original item of content to form a watermarked item of content, from which the watermark symbols are decodable by a suitable corresponding watermark decoder. The watermarked item of content can then be distributed to one or more users (or recipients or receivers).

The method used for adding a watermark codeword to an item of content depends on the intended purpose of the watermark codeword. Some watermarking techniques are designed to be "robust", in the sense that the embedded watermark codeword can be successfully decoded even if the watermarked item of content has undergone subsequent processing (be that malicious or otherwise). Some watermarking techniques are designed to be "fragile", in the sense that the embedded watermark codeword cannot be successfully decoded if the watermarked item of content has undergone subsequent processing or modification. Some watermarking techniques are designed such that the difference between the original item of content and the watermarked item of content is substantially imperceptible to a human user (e.g. the original item of content and the watermarked item of content are visually and/or audibly indistinguishable to a human user). Other criteria for how a watermark is added to an item of content exist.

Digital forensic watermarking, often referred to as fingerprint watermarking or simply fingerprinting, is increasingly being used to trace or identify a particular copy of content that had been provided to one (or more) users/receivers, to thereby identify those one (or more) users/receivers. This could be used, for example, to trace users who have "leaked" their content in an unauthorized manner (such as an unauthorized online distribution or publication of content). For this type of watermarking process, respective watermark codewords are assigned to each legitimate/authorized receiver/user. Each of the receivers/users receives, or is provided access to, a copy of the original item of content with their respective watermark codeword embedded therein. Then, if an unauthorized copy of the item of content is located, the watermark codeword can be decoded from that item of content and the receiver/user that corresponds to the decoded watermark codeword can be identified. A computer-implemented method of fingerprinting is described in WO 01/67667. The method of WO 01/67667 comprises (a) encrypting a copy of at least one part of content having a first watermark, (b) encrypting a copy of at least one part of the content having a second watermark, and (c) combining parts of the encrypted copy with the first watermark and parts of the encrypted copy with the second watermark in a manner unique for an individual client.

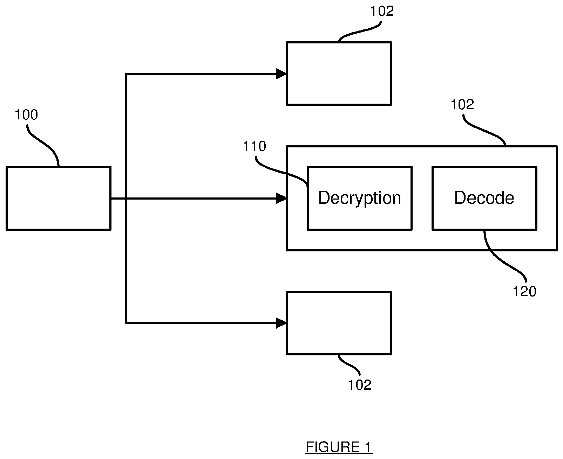

Figure 1 schematically illustrates an example system in which fingerprint watermarking may be deployed. In particular, a content provider 100 is arranged to provide, or supply, content to one or more receivers 102.

The content provider 100 may be arranged to communicate with a receiver 102 over a network (not shown), so that the content provider 100 may provide the content to the receivers 102 over the network. In this case, the network may be any kind of network suitable for transmitting or communicating the content from the content provider 100 to the receivers 102. For example, the network could comprise one or more of a local area network, a wide area network, a metropolitan area network, the internet, a wireless communications network, a cable network, a digital broadcast network, a satellite communication network, a telephone network, etc. The content provider 100 may then communicate with a receiver 102 over the network via any suitable communication mechanism/protocol in order to communicate the content (and any other necessary information, such as conditional access data or digital rights management data) from the content provider 100 to the receiver 102. However, it will be appreciated that other communication scenarios are possible. For example, the content provider 100 may provide to a receiver 102 a physical medium (such as a CD, DVD, BluRay disc, etc.) storing the content. All that is important is that the content provider 100 may provide content to the receivers 102.

The content provider 100 may be any system arranged to provide content to the receivers 102. For example, the content provider 100 may comprise a headend system of a digital broadcast system or of a cable network system, or the content provider 100 may comprise one or more servers for transmitting, or providing access to, content over the internet.

Likewise, each receiver 102 may be any device comprising one or more processors that are arranged to receive and process content received from the content provider 100. For example, the receivers 102 may comprise one or more of a set-top-box, a personal computer, a mobile telephone, a games console, etc.

In Figure 1, three receivers 102 are shown, but it will be appreciated that the content provider 100 may provide content to any number of receivers 102.

One of the receivers 102 is shown in more detail in Figure 1. In particular, the receivers 102 have an associated decryption module 110 and an associated decoder module 120, as discussed below. Whilst the decryption module 110 and the decoder module 120 are shown as being part of the receiver 102, the decryption module 110 and/or the decoder module 120 may be separate from the receiver 102. For example, the decryption module 120 may be implemented, in whole or in part, within a secure decryption device (such as a smart card) removably coupled to the receiver 120. The decoder module 120 may be implemented in a separate device (such as a television set) communicably coupled to the receiver 120.

The content provider 100 may provide the content in encrypted form to the receivers 102, i.e. the content provider 100 may encrypt the content (or at least a part thereof) before communicating the content to the receivers 102. The content provider 100 may then provide one or more decryption keys to the receivers 102 - the decryption module 110 of a receiver 102 is configured to use of a decryption key that that receiver 102 has been provided with to decrypt an amount of encrypted content that that receiver 102 has received. In this way, access to the content may be controlled, insofar as a receiver 102 will only be able to decrypt and access content if that receiver 102 has been provided with a suitable decryption key.

There are numerous mechanisms by which decryption keys may be provided to receivers 102. For example, in digital broadcast systems, entitlement control messages (ECMs) and entitlement management messages (EMMs) are used as a mechanism for providing content decryption keys to receivers 102. As the use of ECMs and EMMs is well-known, it shall not be described in detail herein. However, in brief, control words (CWs), which are decryption keys or decryption information for enabling a receiver 102 to decrypt a corresponding amount of encrypted content, are transmitted to receivers 102 in ECMs. The CWs are themselves sent in encrypted form in the ECMs. To enable a receiver 102 to access/decrypt an ECM in order to access and use the CW contained therein, the receiver 102 is provided with, and receives, an EMM. The EMM contains a decryption key DK₁ that enables the receiver 102 to decrypt the CWs in the ECMs (and hence obtain access to the encrypted content). The decryption key DK₁ is itself sent in encrypted form in the EMM. The EMM is targeted at a specific receiver 102 (or a specific set of receivers 102), in that the decryption key DK₁ is encrypted in the EMM using an encryption key EK₂ that corresponds to a decryption key DK₂, or product key, that is known only to that specific receiver 102 (or to that specific set of receivers 102) and that can be used to decrypt the encrypted decryption key DK₁. In this way, only a receiver 102 that has access the product key DK₂ can access the decryption key DK₁ contained in the EMM. In this way, control is provided over which particular receivers 102 can and cannot access encrypted content.

Other ways of communicating a decryption key to a receiver 102 may be used - for example, the receiver 102 (or an operator thereof) may contact the content provider 100 to request a decryption key (for example, requesting a suitable password over the telephone).

The content itself may be encoded using a suitable coding scheme (or standard or format). The content may have been encoded by the content provider 100, or the content provider 100 may have received already-encoded content from another source (not shown in Figure 1). The coding scheme itself could, for example, be a data compression scheme which enables more efficient communication of the content from the content provider 100 to the receivers 102. For example: if the content comprises video data, then that video data may be encoded via any suitable video coding scheme, such as MPEG2 or MPEG4 or H264; if the content comprises audio data, then that audio data may be encoded via any suitable audio coding scheme, such as MP3 or AAC; if the content comprises webpages, then the webpages may be encoded via HTML; if the content comprises image data, then that image data may be encoded via any suitable image coding scheme, such as JPEG, BMP, TIFF, etc. Many different coding schemes are know and the above are merely examples. The decoding module 120 of the receiver 102 is configured to decode (or interpret) content that has been encoded by one or more coding schemes. For example, if the receiver 102 is intended to process video data, then the decoder module 102 may be arranged to carry out MPEG2 decoding or MPEG4 decoding or H264 decoding; if the receiver 102 is intended to process audio data, then the decoder module 102 may be arranged to carry out MP3 decoding or AAC decoding; if the receiver 102 is intended to process webpages, then the decoder module 102 may be arranged to carry out HTML decoding; etc. Again, many other types of decoding processing for other coding schemes are known and could be implemented by the decoding module 120 to decode content encoded according to that coding scheme.

The content provider 100 provides encoded content, some or all of which has been encrypted, to the receivers 102. The receivers 102 use their decryption modules 110 to perform a decryption process to access (or at least try to access) encoded content; the receivers 102 also use their decoder modules 120 to decode decrypted content.

Once the content has been decrypted and then decoded, it may be output as necessary, for example, to a user via a display/monitor/screen and/or one or more audio speakers or to a storage medium to be recorded and stored thereon.

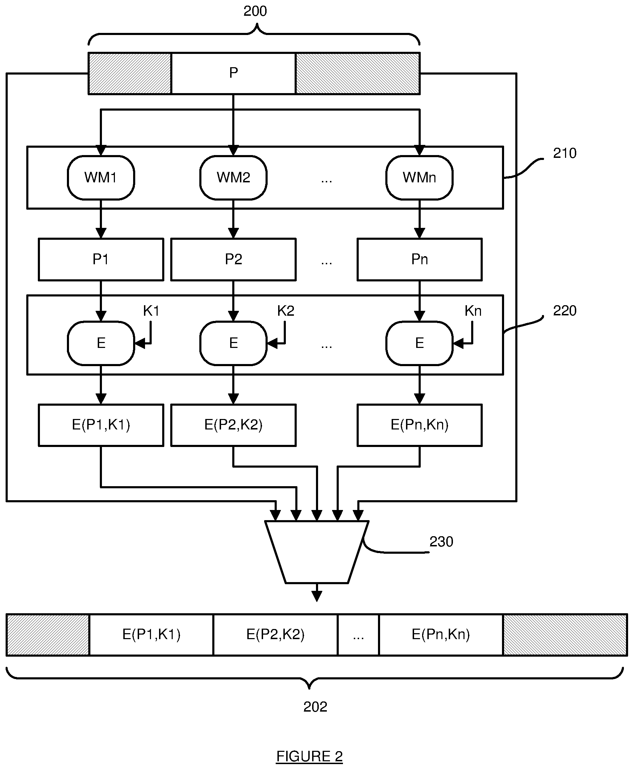

An example fingerprint watermarking process is described in EP2341708. Figure 2 schematically illustrates, at a high level, this fingerprint watermarking process. This fingerprint watermarking process could be applied to the example system described above with reference to Figure 1, with the content provider 100 of Figure 1 carrying out the fingerprint watermarking process of, and comprising the modules depicted in, Figure 2.

In Figure 2, there is an initial quantity of data 200 to be transmitted from the content provider 100 to a receiver 102. A portion P of data is selected from the initial quantity of data 200. The initial quantity of data 200 could, for example, be a packetized elementary stream (PES) for a digital broadcast signal, with the portion P being one of the packets in the packetized elementary stream. However, it will be appreciated that the initial quantity of data 200 may be any other form of data and/or the portion P be any other segment/section/part of the initial quantity of data 200.

A version generation module 210 generates a plurality of different versions of the portion P. In Figure 2, n different versions of the portion P, labelled P1, P2, ..., Pn, are generated. Each version Pi (i = 1, 2, ..., n) may be formed, for example, by watermarking a copy of the portion P via a watermarking process WMi to embed a corresponding payload (or watermark data or codeword) into the copy of the portion P. The particular manner by which the modifications, or the watermarking, is performed by the version generation module 210 is unimportant, insofar as it only matters that the n different versions can be distinguished from each other by an appropriate decoder/detector (such as a watermark decoder). However, it is preferable if the modifications/watermarks are robust and imperceptible to a human user.

Each of the modified versions P1, P2, ... , Pn is then encrypted by an encryption operation E implemented by an encryption module 220. Each modified version Pi is encrypted using a corresponding encryption key Ki to form a corresponding encrypted portion E(Pi,Ki) (i = 1, 2, ... , n). For each encryption key Ki, there is a corresponding decryption key DKi which can be used to decrypt the encrypted portion E(Pi,Ki) to produce the modified portion Pi. As will be appreciated, given the nature of encryption algorithms, performing the decryption operation on an encrypted portion E(Pi,Ki) using a key other than the corresponding decryption key DKi (e.g. trying to carry out decryption using a key DKj where i≠j) will simply produce noise or random data.

A multiplexer 230 then combines or multiplexes the set of n encrypted portions E(Pi,Ki) (i = 1, 2, ... , n) and data from the initial quantity of data 200 other than the selected portion P. In particular, the original content portion P is replaced in the initial quantity of data 200 by the set of n encrypted portions E(Pi,Ki) (i = 1, 2, ... , n) to form an output quantity of data 202 as a single data stream.

The output quantity of data may then be provided to a plurality of receivers 102 by a transmission module (not shown in Figure 1) of the content provider 100. Each receiver 102 is provided with just one decryption key DKa from the set of decryption keys DK1, DK2, ... , DKn. The decryption module 110 of a receiver 102 uses the decryption key DKa provided to that receiver 102 to try to decrypt each of the n encrypted portions E(Pi,Ki) in the quantity of data 202 that the receiver 102 has received. The encrypted portion E(Pa, Ka) formed using an encryption key Ka corresponding to the decryption key DKa provided to the receiver 102 is decrypted correctly, so that the receiver 102 has access to the corresponding modified version Pa. However, when the receiver 102 performs the decryption operation on each of the other encrypted portions using the decryption key DKa, the decryption operation simply outputs an amount of noise or random data. EP2341708 describes how, by suitably packaging the encrypted portions into the initial quantity of data 200 to form the output quantity of data 202, the error handling functionality implemented by the decoder module 120 of the receiver 102 essentially ignores, or removes, this noise or random data - i.e. the decoder module 120 will only use and output content that has been correctly decrypted from the encrypted portion E(Pa,Ka) that corresponds to the decryption key DKa provided to the receiver 102 and the decoder module 120 will skip over the other encrypted portions that do not correspond to the decryption key DKa provided to the receiver 102.

A plurality of portions located at different places within the initial quantity of data 200 may be handled this way (only one is shown in Figure 2). Each receiver 102 may then be provided with a specific set of decryption keys (namely, for each portion, the receiver 102 is assigned a decryption key to enable the receiver 102 to decrypt just one of the modified versions of that portion). The resulting content output by the decoder module 120 of a receiver 102 will then contain the specific modified content portions that correspond to the specific set of decryption keys assigned to that receiver 102. In this way, content can be traced back to a particular receiver. In other words, the availability of decryption keys in the receiver 102 thus result in a differently watermarked decoded signal output by the receiver 102.

In the above-described fingerprint watermarking process, the encrypted portions E(Pi,Ki) (i = 1,2,...n) were formed using the same encryption operation (or algorithm) E but with different keys Ki (i.e. Ki ≠ Kj for 1≤i<j≤n). Additionally, or alternatively, the encryption operations used to generate the encrypted portions E(Pi,Ki) (i = 1,2,...,n) may vary from portion to portion. In other words, for 1≤i<j≤n, an encryption operation Ei may be used to generate one encrypted portion Ei(Pi,Ki) whilst a different encryption operation Ej may be used to generate another encrypted portion Ej(Pj,Kj) - in this case, the keys Ki and Kj for these encrypted portions may be different from each other or may be the same as each other. The receiver would implement a decryption operation (or algorithm) Di corresponding to one of the encryption operations Ei. As will be readily understood, using the decryption operation Di on an encrypted portion Ej(Pj,Kj) (j≠i) that has been generated using an encryption operation Ej that does not correspond to that decryption operation Di will result in the decryption operation Di outputting an amount of noise or random data (in a similar manner to performing decryption using an incorrect decryption key). Thus, different encryption operations may be used in the process shown in figure 2 in place of, or in addition to, the use of different encryption keys. In general, then, all that is required is that a plurality of encrypted portions are produced, where each encrypted portion is encrypted differently (by virtue of the choice of encryption key and/or encryption operation) from each of the other encrypted portions. In other words, one modified portion is encrypted with a corresponding "encryption process" different from the encryption process used to encrypt the other modified portions. Here, the term "encryption process" relates to the pair made up of (a) the encryption operation/algorithm used and (b) the encryption key used, so that two encryption processes can differ in terms of their encryption algorithm and/or their encryption key. Similarly, an encryption process will have a corresponding decryption process that is made up of the pair comprising (a) a corresponding decryption operation/algorithm and (b) a corresponding decryption key.

The above-described fingerprinting technology works well for broadcast TV and encrypted optical disk distribution models.

Recently, IP content streaming has become more popular due in part to the increase in IP connected content players with IP data rates sufficient for TV content streaming. Many known technologies exist for the delivery of content over the Internet. Some technologies break up the large content file into a large number of smaller units and use a list of references to these smaller units which are then fetched on demand by the content player. These smaller units of data can be stored in network caches in order to reduce content server resources and to decrease bandwidth requirements. Peer-to-peer architectures employ similar techniques to achieve the same benefits.

In response to these developments, the above-described fingerprinting technology has been adapted for other content distribution networks such as peer to peer networks (see EP2204979) and IP content streaming networks (see European Patent Application No. 10175973.6 and International Patent Application No. PCT/EP2011/065561). As described in European Patent Application No. 10175973.6 and International Patent Application No. PCT/EP2011/065561, playlists are used to reference content chunks that are watermarked differently. By issuing a unique playlist containing an individualised sequence of chunk references to a receiver, a server can ensure that the decoded output of the content player contains a watermark (fingerprint) unique to that receiver. In International Patent Application No. PCT/EP2011/050464, the content chunk selection is based on the existence of a unique sequence of communication devices connecting the content server with a content player. Each communication device contributes to the selection of the suitably marked content chunks as they are transmitted to the receiving device (the content player). Network caching is used in both of these data chunk selection systems

Live content distribution involves forwarding live digital TV content to all content receivers simultaneously so that all viewers may witness the event live as it unfolds. This aspect of live content distribution significantly complicates the effective use of network caching schemes. Therefore, it is an object of the present invention to provide fingerprinting technology appropriate for live content distribution of live TV events.

US 2004/0260930 describes a fingerprinting apparatus, comprising: a plurality of receiving units to receive a plurality of input datasets, each of the plurality of input datasets divided into a plurality of input segments, at least one of the plurality of input datasets uniquely marked; a selector to select at least one input segment from one of at least two different input datasets of the plurality of input datasets; and at least one combiner to arrange the selected at least one input segment to produce an output dataset having a plurality of output segments, such that the number of output segments is equal to the number of input segments in each input dataset.

### SUMMARY OF THE INVENTION

The present invention aims to provide partially or fully distinguishable content to all receivers of a live multicast data stream.

According to a first aspect of the present invention, there is provided a method of distributing a first piece of content to multiple receivers using multicast channels. The first piece of content comprises a plurality of content portions. The method comprises: (a) for each of a plurality of selected content portions of the plurality of content portions, there being two or more versions of each said selected content portion, allocating each version of that selected content portion to a respective multicast channel; and (b) providing each receiver with access to a respective group of the multicast channels, each receiver being identifiable at least in part by means of the respective group of multicast channels for that receiver.

The method is able to partially or completely distinguish between receivers by virtue of the receiver multicast channel groups. For example, the receivers may be completely distinguished from one another by virtue of their multicast channel groups if the multicast channel groups are different for each receiver (i.e. each receiver is provided access to a multicast channel group different from the multicast channel groups to which each other receiver has access). Alternatively, if there is some overlap between the multicast channel groups of different receivers (i.e. if at least one receiver has access to the same multicast channel group as at least one other receiver), then the multicast channel groups alone would provide only a partial distinction between receivers. In this case, a further distinguishing characteristic would need to be implemented to provide a complete distinction between receivers. For example, a fingerprinting scheme (see Figure 2) could be used in combination with the claimed invention to ensure that, for a group of receivers with access to a common group of multicast channels, each receiver is able to decrypt a differently watermarked version of each content portion. In this way, the receivers may be completely distinguished by means of their multicast channel groups in combination with the watermarks present on their decrypted content.

Optionally, one version of each selected content portion is a modified version of that selected content portion. Optionally, the one modified version of each selected content portion comprises a first watermarked version of that selected content portion. Optionally, another version of each selected content portion comprises a second watermarked version of that selected content portion using a second watermark.

The content portions may be in the form of separate files, or in the form of addressable elements of a single file. All versions of a given content element have the same content relevant for the end user. For example, a particular content portion may relate to a particular video frame of a particular TV programme. However, the versions (or copies) of a given content portion may differ e.g. in the watermark applied to each version, which watermark is typically not (or hardly not) noticeable by the end user, such that all versions of a given content portion appear to be identical to the end user. Alternatively, if the content portions relate to TV advertisements, for example, then different versions of the content portions may relate to different advertisements such that local advertising may be provided to receivers depending on their locality.

Optionally, one version of each selected content portion is an unmodified original version of that selected content portion. For example, consider the case where two versions of each selected content portion are generated, with the first version being a watermarked version and the second version being an unmodified (i.e. original/clear/clean) version. This embodiment provides one way of transmitting non-watermarked (i.e. non-modified) to the receiver.

In one embodiment, the plurality of content portions consist of the selected content portions and other non-selected content portions, and the method further comprises: (c) allocating the non-selected content portions to one or more multicast channels different from the multicast channels to which the versions of the selected content portions are allocated; and (d) providing each receiver with access to the one or more multicast channels to which the non-selected content portions are allocated. This embodiment provides for the separate transmission of non-watermarked (i.e. non-modified) content portions to the receiver.

In an alternative embodiment, the plurality of content portions consist of the selected content portions and other non-selected content portions, and the method further comprises: (c) allocating the non-selected content portions to those multicast channels to which the versions of a particular one of the selected content portions are allocated such that each non-selected content portion is allocated to two or more multicast channels. For example, the non-selected content portions could all be allocated to the same multicast channels as all of the versions of a first content portion.

Optionally, all of the content portions are separated in time. In other words, each content portion is associated with a respective unique time or time window (but different versions of a given content portion will be associated with the same time or time window as one another). This embodiment enables the same group of multicast channels to be reused for transmission of later content portions.

Advantageously, for each selected content portion, each version of that selected content portion is allocated to a respective multicast channel different from multicast channels to which other versions of that selected content portion are allocated. Thus, different (i.e. separate) multicast channels are used to transmit all the different versions of a given selected content portion. More advantageously, the respective group of multicast channels for each receiver is such that the receiver is provided with access to only one version of each selected content portion. Thus, each receiver is identifiable by means of the respective group of multicast channels for that receiver. In this embodiment, a receiver is only ever given access to one of the multicast channels allocated to the various versions of a particular selected content portion. Hence, each receiver only receives one version of each content portion, so no bandwidth is wasted. In addition, the receiver has no knowledge about the distribution of the different versions of content portions over the multicast channels, so it is more difficult for a malicious receiver to obtain all the watermarked versions of content portions so as to generate an arbitrarily watermarked version. Thus, the present system better protects the content tracing capabilities. Furthermore, this embodiment of the method is able to completely distinguish between receivers by virtue of the receiver multicast channel groups. In this way, the method is able to be used for unique content tracing without the need for encryption.

Optionally, the method further comprises allocating each version of each selected content portion to a multicast channel different from the multicast channels to which versions of other ones of the selected content portions are allocated. Thus, the number of multicast channels required to provide access to all of the versions of all of the selected content portions is MxN where N is the number of selected content portions and M is the number of versions of each selected content portion.

Optionally, each version of each selected content portion is randomly allocated to a respective multicast channel from a plurality of multicast channels. This embodiment provides protection against malicious attacks.

Optionally, the multicast channels are IP multicast channels. IP multicast is a common multicast implementation.

Optionally, at least one receiver comprises a group of sub-receivers. Thus, the group of multicast channels may be used to at least partially identify a group of sub-receivers, rather than a specific sub-receiver.

Optionally, the method further comprises receiving the first piece of content from a content provider.

Advantageously, the method further comprises allocating selected content portions of a second piece of content to at least a subset of the multicast channels to which the versions of the selected content portions of the first piece of content are allocated. This embodiment allows multiple pieces of content to be transmitted on the same multicast channels, which increases the distribution efficiency of the multicast network. In one embodiment, for each multicast channel of the subset of multicast channels, all of the selected content portions allocated to that multicast channel are separated in time. In other words, content portions of the first piece of content and content portions of the second piece of content are time-separated from one another on any given multicast channel (e.g. multicast channel 1). Advantageously, each selected content portion includes an identifier to indicate whether that selected content portion belongs to the first piece of content or to the second piece of content.

According to a second aspect of the present invention, there is provided a multicast system for distributing a first piece of content to multiple receivers using multicast channels. The first piece of content comprises a plurality of content portions. The system comprises a multicast control module and an access control module. The multicast control module is arranged, for each of a plurality of selected content portions of the plurality of content portions, there being two or more versions of each said selected content portion, to allocate each version of that selected content portion to a respective multicast channel. The access control module is arranged to provide each receiver with access to a respective group of the multicast channels. Each receiver is identifiable at least in part by means of the respective group of multicast channels for that receiver.

Optionally, the multicast system further comprises a version generation module arranged to generate the two or more versions of each selected content portion.

Optionally, the version generation module comprises a modification module arranged to modify the selected content portions. Optionally, the modification module comprises a watermarking module arranged to watermark the selected content portions.

Optionally, the version generation module is arranged to generate one version of each selected content portion as an unmodified original version of that selected content portion.

Optionally, the plurality of content portions consist of the selected content portions and other non-selected content portions. In one embodiment, the multicast control module is further arranged to allocate the non-selected content portions to one or more multicast channels different from the multicast channels to which the versions of the selected content portions are allocated. In addition, the access control module is further arranged to provide each receiver with access to the one or more multicast channels to which the non-selected content portions are allocated. In an alternative embodiment, the multicast control module is further arranged to allocate the non-selected content portions to those multicast channels to which the versions of a particular one of the selected content portions are allocated such that each non-selected content portion is allocated to two or more multicast channels.

Advantageously, the multicast control module is further arranged, for each selected content portion, to allocate each version of that selected content portion to a respective multicast channel different from multicast channels to which other versions of that selected content portion are allocated. More advantageously, the respective group of multicast channels for each receiver is such that the receiver is provided with access to only one version of each selected content portion, whereby each receiver is identifiable by means of the respective group of multicast channels for that receiver.

Optionally, the multicast control module is further arranged to allocate each version of each selected content portion to a multicast channel different from the multicast channels to which versions of other ones of the selected content portions are allocated.

Advantageously, the multicast control module is further arranged to randomly allocate each version of each selected content portion to a respective multicast channel from a plurality of multicast channels.

Optionally, the multicast channels are IP multicast channels.

Optionally, at least one receiver comprises a group of sub-receivers.

Optionally, the multicast system further comprises a content reception module arranged to receive the first piece of content from a content provider.

Advantageously, the multicast control module is further arranged to allocate selected content portions of a second piece of content to at least a subset of the multicast channels to which the versions of the selected content portions of the first piece of content are allocated. In one embodiment, the multicast control module is further arranged such that, for each multicast channel of the subset of multicast channels, all of the selected content portions accessed via that multicast channel are separated in time.

In one embodiment, the multicast control module comprises two or more time division multiplexers, each time division multiplexer being arranged to receive a respective one of the two or more versions of each selected content portion from the version generation module and to allocate each selected content portion to a respective multicast channel. This is a practical way of implementing part of the present multicast system.

According to a third aspect of the present invention, there is provided a computer program which, when executed by a processor, causes the processor to carry out the method of the first aspect.

According to a fourth aspect of the present invention, there is provided a data carrying medium carrying the computer program of the fourth aspect. The data carrying medium may be a storage medium or a transmission medium.

Other preferred features of the present invention are set out in the appended claims.

### BRIEF DESCRIPTION OF THE DRAWINGS

Embodiments of the present invention will now be described by way of example with reference to the accompanying drawings in which:
Figure 1 schematically illustrates an example system in which fingerprint watermarking may be deployed;
Figure 2 schematically illustrates, at a high level, a known fingerprint watermarking process;
Figure 3 schematically illustrates, at a high level, an example system for IP multicast distribution of live TV content;
Figure 4 schematically illustrates, at a high level, an example IP multicast distribution system in which a watermark is added to the content in order to prove the copyright ownership of the content;
Figure 5 schematically illustrates how the fingerprinting technology of Figure 2 could be applied to the IP multicast distribution system of Figure 3;
Figure 6 schematically shows an IP multicast distribution system according to an embodiment of the invention;
Figure 7 schematically illustrates an example of the data traffic on the IP multicast channels used in the IP multicast distribution system of Figure 6;
Figure 8 schematically illustrates the receiver end of the IP multicast distribution system of Figure 6;
Figure 9 schematically illustrates an example of the data traffic on the subset of IP multicast channels accessed by the receiver of Figure 8;
Figure 10 is a flow chart schematically illustrating the general methodology of the present invention;
Figure 11 schematically illustrates an example of the data traffic on the IP multicast channels used in the IP multicast distribution system of Figure 6 when the IP multicast address range is reused so as to distribute three separate pieces of content simultaneously; and
Figure 12 schematically illustrates how a receiver may interact with a multicast service provider in order to obtain a specific piece of content using the IP multicast distribution system of Figure 6; and
Figure 13 schematically illustrates an alternative example of data traffic on IP multicast channels.

### DETAILED DESCRIPTION OF A PREFERRED EMBODIMENT

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader scope of the invention as set forth in the appended claims.

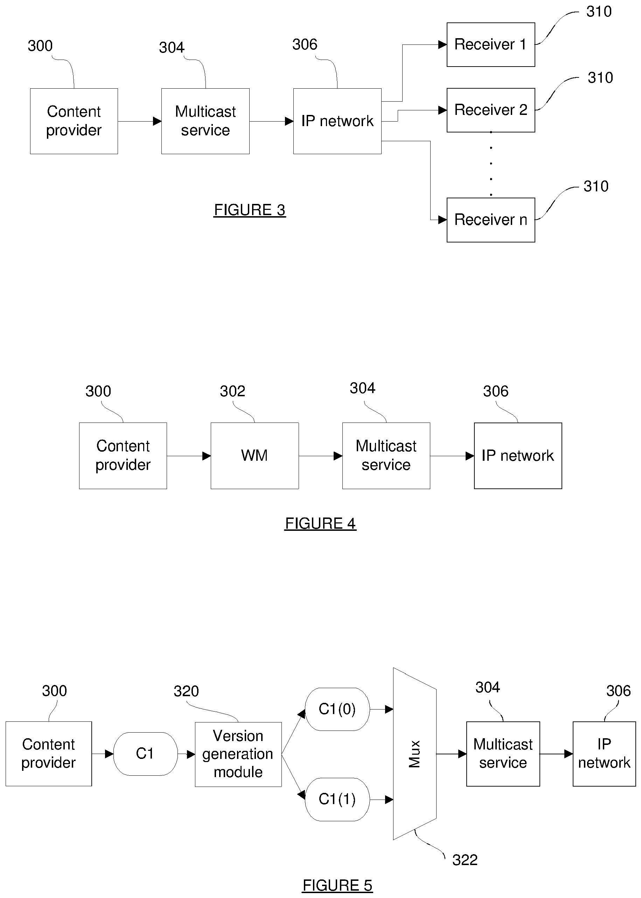

IP multicast is a well known multicast technique that makes it possible to forward data packets of a data stream to multiple receiving parties that have indicated that they want to receive the data stream. Figure 3 schematically illustrates, at a high level, an example system for IP multicast distribution of live TV content. A content provider 300 acquires the content from the live TV feed and encodes it into a suitable format for the receivers 310. The content provider 300 transmits the content data stream to an IP multicast service 304 that is responsible for managing the delivery of the data to the receivers 310 that have signed up to receive the live TV content. The multicast service 304 delivers the live TV content to the receivers 310 by means of an IP network 306. In this multicast scheme, each receiver 310 sends a request to a multicast group address signalling that it wants to receive content from the IP multicast service 304. The relevant network nodes of the IP network 306 are then configured to forward the content to the requesting receiver 310. This arrangement makes it possible for the live TV content provider 300 to only transmit a single instance of the content data stream to the IP multicast address and rely on the IP network 306 to deliver the data to multiple receivers 310 in a scalable fashion. Multicast IP is an important technology for the delivery of live TV events.

In some systems, a watermark is added to the content in order to prove the copyright ownership of the content in case of legal disputes. Figure 4 schematically illustrates such a system. In Figure 4, a watermarking module 302 processes the content data stream from the content provider 300 and embeds the watermark into the content, thereby marking the content as originating from that specific content provider 300. The resulting content data stream is transferred to the multicast service to be delivered to the receivers 310 (not shown in Figure 4) by the IP network 306, as before. Each receiver 310 receives an identical copy of the content, each copy being watermarked with the content provider's watermark.

It is desirable to provide fingerprinting technology appropriate for IP multicasting of live TV events. However, the fingerprinting scheme of Figure 2 is not well adapted to IP multicasting. Figure 5 schematically shows how the fingerprinting technology of Figure 2 could be applied to the IP multicast delivery network of Figure 3. For simplicity, the receivers 310 are not shown in Figure 5.

In Figure 5, the content provider 300 provides content C1 to a version generation module 320 similar to the version generation module 210 of Figure 2. The version generation module 320 of Figure 5 generates two versions C1(0) and C1(1) of at least a portion of the content C1. The two versions C1(0) and C1(1) may be generated by inserting different watermarks into each version. Whilst only two versions C1(0) and C1(1) of the content C1 are generated in the embodiment shown in Figure 5, it will be appreciated that many more versions could be generated if desired. For example, it would be possible to generate three or four or more versions of some or all of the content portions rather than just generating two versions. In the two-version embodiment of Figure 5, the two versions C1(0) and C1(1) are differently encrypted by an encryption module (not shown) that is similar to the encryption module 220 of Figure 2. The two encrypted versions are then combined into a merged data stream by a multiplexer 322. The multicast service 304 receives the merged data stream from the multiplexer 322 and transmits the merged data stream to each requesting receiver 310. Thus, each receiver 310 is provided with all of the differently watermarked versions C1(0) and C1(1) of the content C1. However, as for the fingerprinting scheme of Figure 2, each receiver 310 is only provided with one decryption key per content portion. Thus, each receiver is able to gain access to a differently watermarked version of the original content C1. Whilst the version generation module 320 and multiplexer 322 are shown as being separate to the multicast service 304 in Figure 5, it will be understood that the functionality of these components could be carried out in the server of the multicast service 304.

There are three main disadvantages to the IP multicast fingerprinting system of Figure 5. Firstly, since the receiver 310 is provided with all of the differently watermarked versions C1(0) and C1(1) of the content C1, a malicious receiver may be able to gain access to a cleartext (non-encrypted) version of each of these differently watermarked content portions. In this case, the malicious receiver would be able to generate an arbitrarily watermarked output, which would effectively be untraceable, thereby destroying the tracing capability of the watermarking system. The second disadvantage of the system of Figure 5 also relates to the fact that the receiver 310 is provided with all of the differently watermarked versions C1(0) and C1(1) of the content C1. This means that the receiver 310 has received more data than they require in order to access their individually watermarked version of the content C1. This is relatively inefficient in terms of bandwidth and requires higher data rates for the receiver 310 than would be required to provide a single version of the content. This is a particular problem for streaming of live TV content where it is desirable to keep bandwidth and data rates to a minimum as far as possible. The third disadvantage of the system of Figure 5 is that the content portions all need to be encrypted so as to provide secure transmission of the content to the receivers.

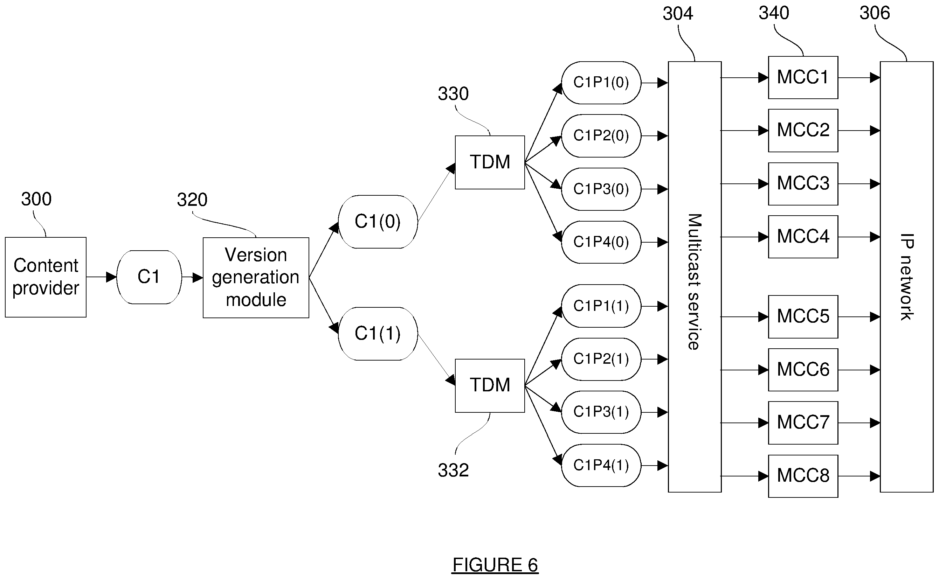

The present invention addresses these issues by using a different system arrangement, an embodiment of which is schematically illustrated in Figure 6. The system of Figure 6 may be considered to be a headend system for IP multicast content distribution.

The system of Figure 6 includes the content provider 300 which provides a first piece of content C1 to the version generation module 320. Thus, in this embodiment, the version generation module 320 acts as a content reception module (not shown) arranged to receive the first piece of content C1 from the content provider 300. In alternative embodiments, the content reception module may be distinct from the version generation module 320. The version generation module 320 generates two versions C1(0) and C1(1) of at least a portion of the content C1. The two versions C1(0) and C1(1) may be generated by modifying one version and leaving the other version unmodified, or by differently modifying each version. In these embodiments, the version generation module 320 comprises a modification module (not shown). The two versions C1(0) and C1(1) may be generated by inserting different watermarks into each version. In this embodiment, the version generation module 320 comprises a watermarking module (not shown). Whilst only two versions C1(0) and C1(1) of the content C1 are generated in the embodiment shown in Figure 6, it will be appreciated that many more versions could be generated if desired. In addition, it will be appreciated that a variable number of different watermarks could be used when generating versions in the version generation module 320. Sometimes, the same watermark may be used for all versions; at other times, there may be two different watermarks used to create two different versions; and, at other times still, further different watermarks may be used. In other words, the number of different watermarks (and the number of different versions) may not be constant over time.

Next, rather than merging the versions into a single data stream (as in Figure 5), the first version C1(0) is instead forwarded to a first time division multiplexer (TDM) 330 which splits the first version C1(0) into four time-separated content portions C1P1(0), C1 P2(0), C1 P3(0) and C1 P4(0). Similarly, the second version C1(1) is forwarded to a second time division multiplexer (TDM) 332 which splits the second version C1(1) into four corresponding time-separated content portions C1P1(1), C1 P2(1), C1 P3(1) and C1 P4(1). Thus, C1P1(0) and C1P1(1) are differently watermarked versions of the same "first" content portion C1P1 which corresponds to a first time t=T. Similarly, C1 P2(0) and C1P2(1) are differently watermarked versions of the same "second" content portion C1 P2 which corresponds to a second time t=T+1, etc. Whilst the embodiment of Figure 6 shows only four time-separated content portions of each version C1(0) and C1(1) of the content C1, it will be appreciated that the content could be split into more or less content portions if desired.

It will be appreciated that the order of the version generation module 320 and the TDMs 330 and 332 could be switched. In other words, one could first do the time division into content portions C1P1, C1P2, etc., and then do the version generation (e.g. watermarking) to generate C1P1(0), C1P1(1), C1 P2(0), C1 P2(1), etc. separately.

All of the time-separated content portions are then processed by the multicast service 304 which allocates each version of each content portion to a unique IP multicast channel from a group of IP multicast channels 340 for delivery to the IP network 306. In particular, C1P1(0) is allocated to a first multicast channel MCC1, C1P2(0) is allocated to a second multicast channel MCC2, C1P3(0) is allocated to a third multicast channel MCC3, C1P4(0) is allocated to a fourth multicast channel MCC4, C1P1(1) is allocated to a fifth multicast channel MCC5, C1P2(1) is allocated to a sixth multicast channel MCC6, C1P3(1) is allocated to a seventh multicast channel MCC7, and C1P4(1) is allocated to an eighth multicast channel MCC8. Thus, each version of each particular content portion (e.g. each version C1P1(0) and C1P1(1) of content portion C1 P1) is allocated to a different IP multicast channel. In other words, each version of a given content portion is allocated to an IP multicast channel different from the IP multicast channels to which other versions of that given content portion are allocated. In addition, all versions of any given content portion (e.g. C1P3) are allocated to IP multicast channels different from those IP multicast channels to which versions of other content portions (e.g. C1P1, C1P2 and C1P4) are allocated.

In the embodiment of Figure 6, the multicast service 304 forwards each content portion received from the TDMs 330 and 332 to the next IP multicast channel on a rotating basis. Different schemes may also be used depending on the desired complexity. It may be desirable to add complexity so as to complicate attacks based on monitoring IP multicast channel data transmissions. For example, it may be desirable to apply a randomising scheme such that each version of each selected content portion is randomly allocated to an IP multicast channel from a plurality of IP multicast channels. Such an approach would help to avoid a malicious receiver implementation in which the malicious receiver attempts to guess other IP multicast addresses and thereby obtain all watermarked content portions. Malicious receiver attacks may also be combated by encrypting each content portion with a different key. The encryption would help to prevent the selection and use of other IP multicast streams. However, unlike the example in Figure 2, the present invention provides some degree of protection against this type of attack even without encryption.

Thus, in the embodiment of Figure 6, the multicast service 304 and, to some extent, the TDMs 330 and 332, act as a multicast control module (not shown) for controlling which multicast channels are used for which content portions. In particular, the multicast control module is arranged to receive the two or more versions of each selected content portion from the version generation module. For each selected content portion, the multicast control module is further arranged to allocate each version of that selected content portion to an IP multicast channel different from IP multicast channels to which other versions of that selected content portion are allocated.

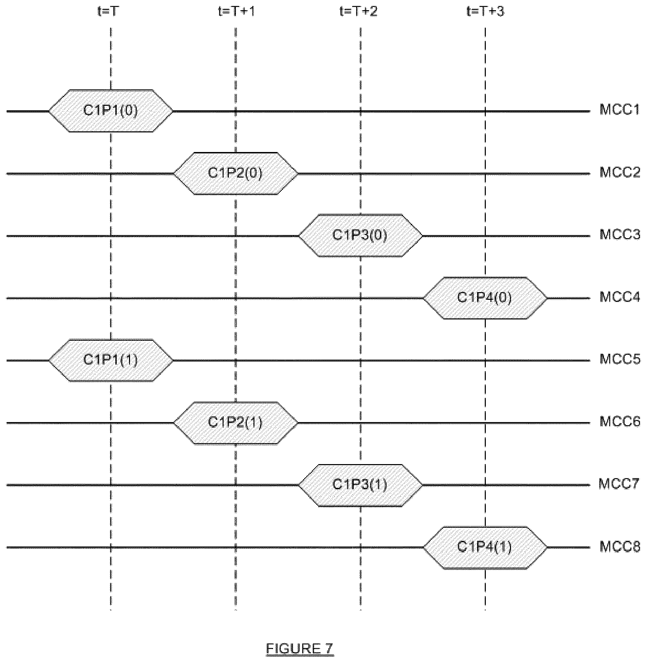

The data traffic on the group of IP multicast channels 340 of Figure 6 is shown schematically in Figure 7. The two different versions C1P1(0) and C1P1(1) of the first content portion C1P1 at time t=T are transmitted on different IP multicast channels MCC1 and MCC5 respectively. The two different versions C1 P2(0) and C1 P2(1) of the second content portion C1P2 at time t=T+1 are transmitted on different IP multicast channels MCC2 and MCC6 respectively. The two different versions C1 P3(0) and C1 P3(1) of the third content portion C1P3 at time t=T+2 are transmitted on different IP multicast channels MCC3 and MCC7 respectively. The two different versions C1P4(0) and C1P4(1) of the fourth content portion C1P4 at time t=T+3 are transmitted on different IP multicast channels MCC4 and MCC8 respectively.

As well as acting as a multicast control module, the multicast service 304 in the embodiment of Figure 6 also acts as an access control module (not shown) for controlling which receivers are able to gain access to which multicast channels. In particular, the access control module is arranged to provide each receiver with access to a respective group of the IP multicast channels, the group being such that each receiver is provided access to only one version of each selected content portion, each receiver being identifiable by means of the respective group of IP multicast channels for that receiver.

The multicast system of Figure 6 includes a processor (not shown) to perform at least some of the functionality described above.

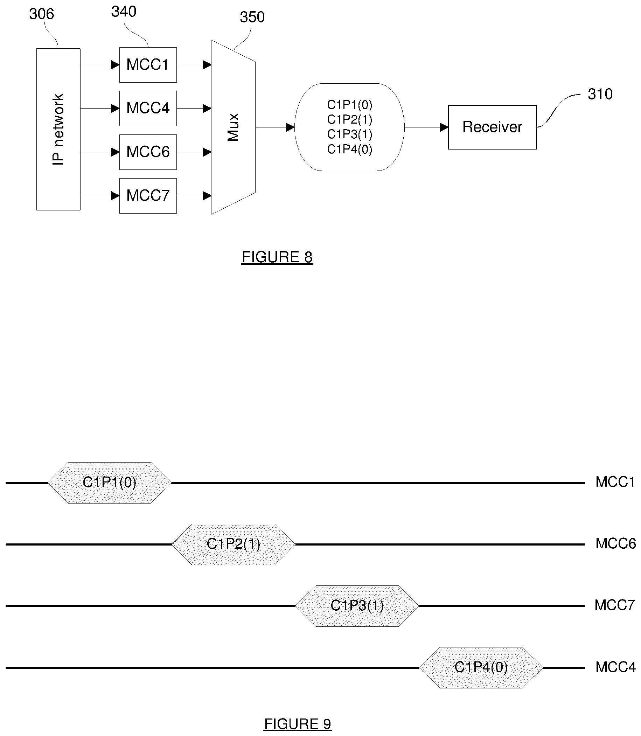

An example of the receiver end of the IP multicast distribution system is schematically illustrated in Figure 8 for a particular receiver 310. As shown in Figure 8, the receiver 310 only receives data from a subset of the group of IP multicast channels 340. In the example of Figure 8, the receiver 310 receives data from IP multicast channels MCC1, MCC4, MCC6 and MCC7. Multicast channel MCC1 carries content portion C1P1 (0). Multicast channel MCC4 carries content portion C1P4(0). Multicast channel MCC6 carries content portion C1 P2(1). Multicast channel MCC1 carries content portion C1P3(1). As content portions arrive on each of the subset of IP multicast channels, they are forwarded to the receiver 310. A receiver multiplexer 350 removes possible overlaps of data from different content portions that were transmitted over different IP multicast channels and merges the different streams into one stream for the receiver. Importantly, the present method does not require any switching of multicast channels (which can be slow due to the join/leave latency for IP multicast), but instead requires a receiver to combine content received from multiple multicast channels (e.g. by multiplexing). In the example shown in Figures 6-9, the number of multicast channels (four) in the subset accessed by the receiver 310 matches the number of timeslots (four) at the content fingerprinting and transmission system. It should be noted that each receiver 310 may be related to an individual end user or to a group of end users (i.e. each receiver may comprise a group of sub-receivers).

The data stream going to the multiplexer 350 of the receiver 310 is schematically illustrated in Figure 9. For each timeslot t, the receiver multiplexer 310 receives exactly one version of each content portion. For timeslot t=T, the receiver 310 obtains the content portion C1P1(0) from multicast channel MCC1. For timeslot t=T+1, the receiver 310 obtains the content portion C1 P2(1) from multicast channel MCC6. For timeslot t=T+2, the receiver 310 obtains the content portion C1P3(1) from multicast channel MCC7. For timeslot t=T+3, the receiver 310 obtains the content portion C1P4(0) from multicast channel MCC4. Thus, the receiver multiplexer 350 receives content portions of the first piece of content C1 with a binary marking of 0110 (or 0x6).

In the case of multiple receivers, each receiver 310 of the first piece of content C1 is granted access to a different subset of the group of IP multicast channels 340, thereby resulting different binary markings in each receiver's received version of the first piece of content C1 (e.g. 0000, 0001, 0010, etc.). In other words, a given receiver 310 is identifiable by means of its respective subset of IP multicast channels, which are associated with a respective binary marking or fingerprint.

In summary, the system described above with respect to Figure 6-9 distributes the content over multiple IP multicast channels where each channel carries a selected subset of content portions and where differently watermarked instances of the content portions are transmitted over different IP multicast channels. The multicast service provides each receiver with a unique combination of IP multicast channels on which the receiver can obtain all the content portions it needs to generate its uniquely watermarked output, whilst only providing the receiver with a single version of each particular content portion. As each IP multicast channel carries only a subset of all the content portions, the combination of IP multicast channels provides the receiver with all of the content portions that are needed to decode the content. As the receiver does not have to discard any content portions, a bandwidth saving is achieved over the system of Figure 5. As the receiver has no knowledge about the distribution of the differently watermarked content portions over the IP multicast channels, it is more difficult for a malicious receiver to obtain all the content portions to generate an arbitrary watermarked output. Thus, the present system better protects the content tracing capabilities, as compared to the system of Figure 5.

It will be appreciated that the different versions of each content portion need not be differently watermarked versions. The scheme of using multiple multicast channels to transmit a video content stream also has other applications as well. One example would be the distribution of local advertisements. In this case, the different versions would be different advertisements appropriate to the locations of the receivers (e.g. different advertisements in different languages for different countries). In other words, the invention covers the concept of transmitting in a timeslot of a program multiple different advertisements to subsets of the receiver infrastructure. Another example would be the distribution of personalised versions of the TV content at certain times. In this case, the different versions would be differently personalised depending on the receiver.

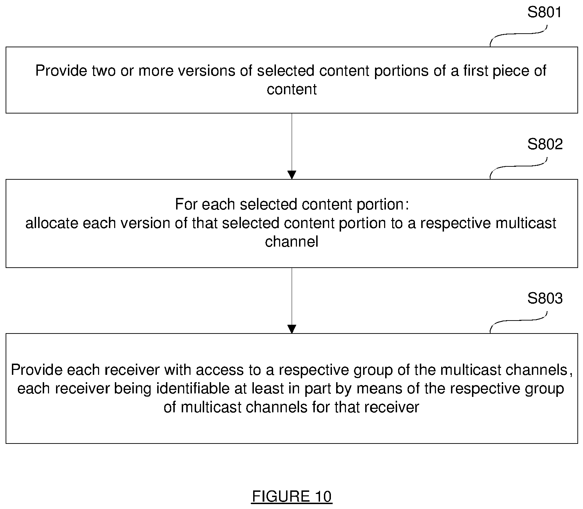

The general methodology of the present invention is illustrated in the flow chart of Figure 10. In particular, Figure 10 illustrates a method of distributing a first piece of content to multiple receivers using multicast channels. The first piece of content includes a plurality of content portions.

Step S801 of the method involves providing two or more versions of selected content portions of the plurality of content portions. Thus, although different versions of all four content portions are generated in the example of Figures 6-9, the method does not necessarily require generation of versions of all of the content portions of the first piece of content. In practice, only a limited set of the content portions in a content stream are generally selected for watermarking. Step S801 of the method requires that the two or more versions of the selected content portions exist and are provided to be accessible for processing during the remaining method steps. Step S801 may optionally involve the actual generation of the versions of the selected content portions, but this may be a pre-processing step which does not form part of the method.

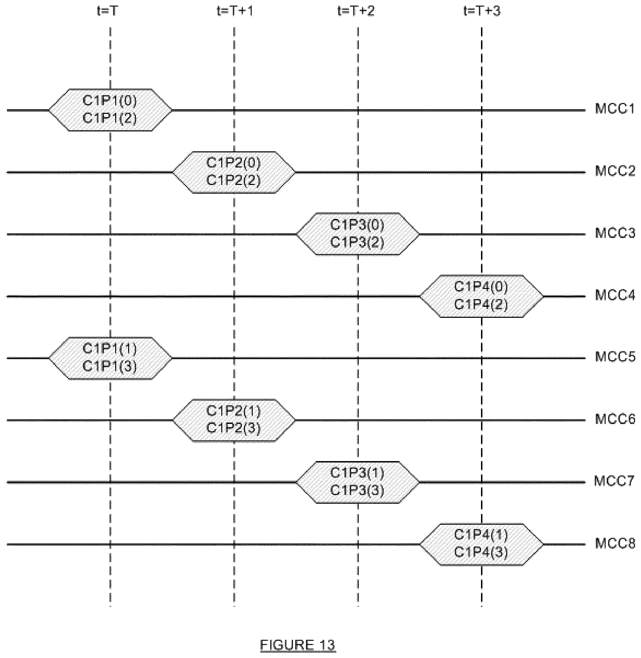

Step S802 of the method then involves, for each selected content portion, allocating each version of that selected content portion to a respective multicast channel. In a preferred embodiment (as described above with reference to Figures 6-9), for each selected content portion, each version of that selected content portion is allocated to a multicast channel different from multicast channels to which other versions of that selected content portion are allocated. In other words, all of the versions of a given content portion are allocated to separate multicast channels, but this feature is optional, as described below with reference to the embodiment of Figure 13.

In step S803, each receiver is provided with access to a respective group of the multicast channels. Each receiver is identifiable at least in part by means of the respective group of multicast channels for that receiver. Optionally (e.g. see the embodiment Figures 6-9), the group is such that each receiver is provided access to only one version of each selected content portion. In this case, each receiver is fully (i.e. not just partially) identifiable by means of the respective group of multicast channels for that receiver. However, this is not essential (e.g. see the embodiment of Figure 13).

As mentioned above with reference to step S801 of Figure 10, not all content portions in a content stream are generally selected for watermarking. Thus, a content stream for a first piece of content will be made up of the content portions selected for watermarking and the remaining non-selected (non-watermarked) content portions of the first piece of content. The non-watermarked content portions can be allocated to one or more separate IP multicast channels (i.e. the IP multicast channels carrying the non-watermarked content portions are different from the IP multicast channel(s) carrying the watermarked content portions). If the non-watermarked content portions are distributed to all receivers using a common IP multicast channel, then this channel cannot be used for selective distribution of content to a subset of the receivers. Alternatively, it is possible to carry such non-watermarked content portions on multiple IP multicast channels by making copies (i.e. identical versions) of the non-watermarked content portions, and distributing the non-watermarked content portions in the same way as the watermarked content portions. Alternatively still, the non-watermarked content portions may be allocated to those multicast channels to which the versions of a particular one of the selected content portions are allocated such that each non-selected content portion is allocated to two or more multicast channels. For example, referring to the example shown in Figure 7, the non-selected content portions could be allocated to the same multicast channels that are used to distribute the two versions of content portion C1P1, namely multicast channels MCC1 and MCC5. Alternatively MCC2 and MCC6 could be used (as for C1P2), or MCC3 and MCC7 could be used (as for C1P3), or MCC4 and MCC8 could be used (as for C1P4).

In the example described above with reference to Figures 6-9, all versions of any given content portion (e.g. C1P3) are allocated to IP multicast channels different from those IP multicast channels to which versions of other content portions (i.e. C1P1, C1P2 and C1P4) are allocated. In other words, each IP multicast channel only includes a single content portion of the first piece of content. However, it would be possible to have multiple content portions of the same piece of content on the same IP multicast channel, particularly in cases where the multiple content portions are well-separated in time. For example, it would be possible to reuse the eight IP multicast channels MCC1-MCC8 of Figure 7 to distribute later content portions C1P5 (at time t=T+4), C1 P6 (at time t=T+5), C1 P7 (at time t=T+6), and C1 P8 (at time t=T+7). In this case, the receiver 310 may only be given access to the initial subset of IP multicast channels (i.e. MCC1, MCC4, MCC6 and MCC7 in Figure 8) for a limited time (i.e. t=T to t=T+3). Thereafter, the receiver may be given access to a new subset of IP multicast channels (MCC1-MCC8) for accessing later content portions C1P5-C1P8. In this implementation, the same set of IP multicast channels (MCC1-MCC8) are used more than once, but they effectively act as a separate set IP multicast channels since the access permissions for receivers 310 have been reset. This implementation therefore reduces the total number of IP multicast channels required for a particular number of receivers.

In the example described above with reference to Figures 6-9, there are two different copies of each content portion, where N=4 is the number of content portions selected for watermarking. With two different copies of each content portion and using 2N IP multicast channels, it is possible to configure 2^{N} uniquely watermarked combinations of the IP multicast channels that still produce a valid version of the first piece of content C1. In the example of Figures 6-9, N=4. Of course, it will be understood that it is possible to generate more than two copies of each content portion. With three copies of each content portion, and using 3N different IP multicast channels, there are 3^{N} different IP multicast channel combinations. More generally, with M copies of each content portion, and using MxN different IP multicast channels, there are M^{N} different IP multicast channel combinations.

The IP v4 address space only has a fairly limited range of addresses that can be used for multicasting. The IP v6 address space does not have this limitation. For IP v4, it may be desirable for a content provider 300 to send multiple (up to N) different pieces of content simultaneously (e.g. a first piece of content C1, a second piece of content C2, a third piece of content C3, etc.). Either a content decoder in the receiver 310, or the last multicast router in the IP network 306, would need to select only those content portions that belong to the piece of content (C1, C2 or C3, etc.) of interest to the receiver 310. This scheme may therefore provide additional metadata in the headers of data packets of content portions in a multicast stream so as to differentiate between the different pieces of content. These schemes enable applications to share the limited range of IP multicast addresses by relying on further address extensions in the payload of a data packet.

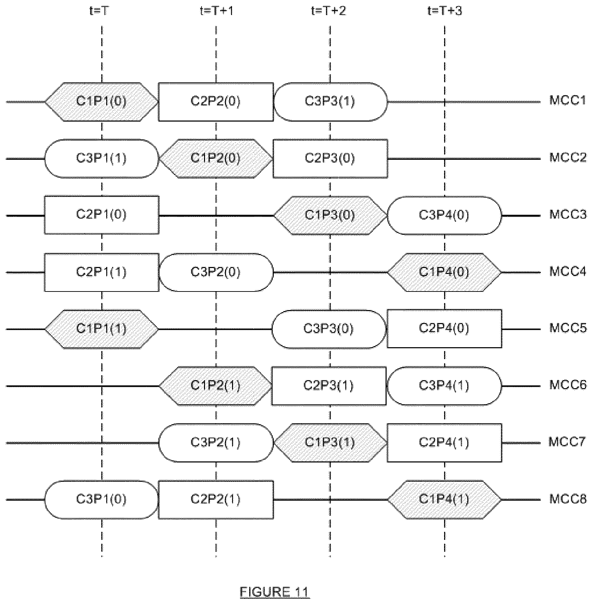

An example of reusing the IP multicast address range is schematically illustrated in Figure 11, where eight IP multicast channels are used to distribute three pieces of content C1, C2 and C3 simultaneously to (up to) sixteen user groups. Each piece of content is made up of four time-separated content portions. There are two different versions of each content portion. The same version/content portion terminology is used in Figure 11 as was used in Figure 7. Thus, C2P3(0) and C2P3(1) are the two versions of the third content portion of the second piece of content C2. For clarity, content portions of the three different pieces of content are illustrated using three different shapes in Figure 11. The shapes may be considered to be "content identifiers". Thus, content portions of the first piece of content C1 are shown as elongated hexagons, content portions of the second piece of content C2 are shown as rectangles, and content portions of the third piece of content C3 are shown as rounded shapes. As an example, multicast group 0101 (or 0x5) for the second piece of content C2 includes multicast channels MCC3, MCC8, MCC2 and MCC7. So as to differentiate between the three different pieces of content C1, C2 and C3, a content identifier is included in a field of the transport format of the content portions. This field can be used in the receiver 310, in the last router in the IP network 306, or in the multicast network protocol of the multicast service 304 in order to optimise communication bandwidth.

If there are N content portions selected for watermarking, and M different watermarked versions of each content portion, then MxN is the minimum number of IP multicast channels required if all versions of all content portions are to be transmitted on separate (i.e. different) IP multicast channels. However, it can be beneficial to have more than the minimum number of IP multicast channels in order to easily scale with increasing numbers of receivers 310. There is an increasing number of receivers 310 when a live event attract more viewers during the course of the event. It is not inefficient to set up more IP multicast channels than the minimum for an expected number of viewers if these IP multicast channels are used to distribute multiple pieces of content (i.e. multiple events) as described above with reference to Figure 11.

The embodiments of the invention illustrated in Figures 6-11 have been described above without detailed reference to encryption/decryption schemes generally used in Digital Rights Management (DRM) or Conditional Access (CA) techniques. However, it will be understood that content protection schemes may be used in combination with the systems and methods of the present invention. For example, the content may be encrypted prior to multicasting by the multicast service 304, and may subsequently be decrypted by a decryption module present in the receiver 310. In such cases, it is advantageous to have the TDMs 330 and 332 align on crypto periods. A crypto period is the time span during which a specific cryptographic key is authorized for use. Thus, for example, a single key may be used to encrypt or decrypt a single content portion. Furthermore, it is advantageous to use the same crypto periods for the watermark insertion in the version generation module 320.

In traditional multicast applications, a single IP multicast group address is used by the content provider 300 and the receivers 310. However, in the present case, multiple IP multicast group addresses are used both by the content provider 300 and the receivers 310.

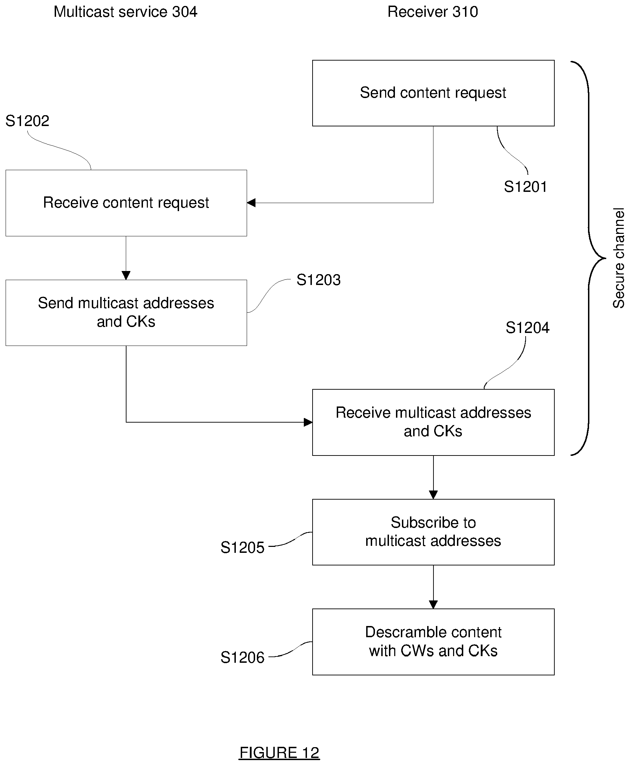

Figure 12 is a flow diagram showing an example of the way in which the receiver 310 may interact with the multicast service provider 304 in order to obtain a specific piece of content. At step S1201, the receiver 310 sends a content request to the multicast service 304. At step S1202, the multicast service 304 receives the content request from the receiver 310. At step S1203, the multicast service 304 sends the receiver 310 the appropriate multicast addresses for that specific piece of content and for that specific receiver 310. Thus, as described above with reference to Figures 6-11, the list of multicast addresses will be individually chosen for a specific receiver 310. At the same time as sending the multicast addresses, the multicast service 304 also sends the receiver 310 the channel keys (CKs) corresponding to the list of multicast addresses. However, as mentioned above, the present system may also be used without encryption, so the transmission of channel keys is an optional step. At step S1204, the receiver 310 receives the multicast addresses and corresponding channel keys (optional) from the multicast service 304. The receiver 310 then subscribes to the various multicast addresses at step S1205. The receiver 310 may then descramble content received on a particular multicast channel by using a key f(CKᵢ, CW, t), where CKᵢ is the channel key for that multicast channel (optional), CW is the control word received by the receiver 310 in an ECM, and t is time, indicating that the key may be time-dependent as well.

Some or all of steps S1201-S1204 may be carried out on a secure channel. Advantageously, a secure channel should be established to send the IP multicast addresses to the receiver 310 at step S1203. This could, for instance, be achieved with standard CA/DRM techniques by enhancing the (already present) secure component (e.g. smartcard, secure software) in the receiver 310 to decrypt the multicast addresses. Subscription to those multicast addresses at step S1205 can then be done with the standard IGMP protocol.

The present system and methodology are primarily intended to be used for live TV events that are to be broadcast over an IP based content delivery network. However, it will be understood that other applications are possible.

In the example described above with reference to Figures 6-9 (and Figure 11), the various versions of a selected content portion (e.g. versions C1P3(0) and C1P3(1) of content portion C1P3) are allocated to different IP multicast channels, and the group of IP multicast channels for each receiver is chosen such that each receiver is provided with access to only one version of each selected content portion (i.e. a receiver has access to C1P3(0) or C1P3(1), but not both). This enables each receiver to be fully (rather than partially) identifiable by means of the respective group of IP multicast channels for that receiver. However, as briefly mentioned above with reference to Figure 10, these parts of the system/method are not essential.

An alternative methodology will now be described below with reference to Figure 13 which schematically illustrates an alternative embodiment of data traffic on multicast channels MCC1-MCC8. In this embodiment, there are four different versions of each content portion. For example, content portion C1P1 has four versions designated as C1P1(0), C1P1(1), C1P1(2) and C1P1(3). Each content portion C1P1 has been watermarked differently - the bracketed "0", "1", "2" or "3" of each version designates which watermark has been used. Two versions of each content portion are allocated to each multicast channel. For example, C1P1(0) and C1P1(2) are allocated to multicast channel MCC1. These two versions of C1P1 have different watermarks. Thus, in this embodiment, a receiver will have access to two different versions of a content portion on any particular multicast channel.

Let us consider two different receivers R1 and R2 that both receive the first piece of content C1 via multicast channels MCC1, MCC6, MCC7 and MCC4. Let us assume that all other receivers Rx receive the first piece of content C1 by accessing alternative groups of multicast channels. In this example, the two receivers R1 and R2 are distinguishable from other receivers Rx by means of the groups of multicast channels assigned to each receiver. However, the two receivers R1 and R2 are not distinguishable from one another based solely on the group of multicast channels that they each access, since the group of multicast channels is the same for both R1 and R2.

In order to distinguish between the two receivers R1 and R2, it is possible to differently encrypt the two versions of a content portion sent on a particular multicast channel such that a receiver may only access one of the two content portions on each channel. In other words, each multicast channel is used to transmit two differently encrypted versions of a content portion. For example, with reference to content portion C1P1 on MCC1, it would be possible to encrypt C1P1(0) with a first encryption operation and to encrypt C1P1(2) with a second encryption operation. If the first receiver R1 is only able to decrypt content portions encrypted using the first encryption operation, and the second receiver R2 is only able to decrypt content portions encrypted using the second encryption operation, then each of the receivers R1 and R2 would access a different cleartext (i.e. unencrypted) version of content portion C1P1. In particular, the first receiver R1 would be able to access a cleartext version of C1P1(0) and the second receiver would be able to access a cleartext version of C1P1(2). Thus, since each of these versions of content portion C1P1 has a different watermark, it would be possible to fully identify each receiver by means of their final cleartext version of the first content portion. For example, the first receiver R1 may have a cleartext version with a watermarking fingerprint 0110, whereas the second receiver R2 may have a cleartext version with a watermarking fingerprint 2332 (assuming that the first encryption operation is used on all of the "0" and "1" watermarked content portions, and that the second encryption operation is used on all of the "2" and "3" watermarked content portions). The final cleartext version of the first content portion for each receiver is determined by both the subset of multicast channels and the decryption keys to which that receiver has access, so each receiver is only partially identifiable by means of the subset of multicast channels for that receiver in this embodiment.

The method and system described above with reference to Figure 13 effectively combines the fingerprinting scheme of Figure 2 with the multicast system and method of Figures 6-9. It will be appreciated that alternative embodiments (e.g. using different numbers of watermarks, and/or different numbers of content portions per multicast channel) are envisaged within the scope of the invention.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality and modules may be implemented as hardware and/or software. For example, the above-mentioned modules may be implemented as one or more software components for execution by a processor of the system. Alternatively, the above-mentioned modules may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program," as used herein, may be a sequence of instructions designed for execution on a computer system, and may include a subroutine, a function, a procedure, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of distributing a first piece of content (C1) to multiple receivers (310) using multicast channels (340), the first piece of content comprising a plurality of content portions (C1P1, C1P2, C1P3, C1P4), the method comprising:
for each of a plurality of selected content portions of the plurality of content portions, there being two or more versions of each said selected content portion, allocating (S802) each version of that selected content portion to a respective multicast channel; and
providing (S803) each receiver with access to a respective group of the multicast channels, each receiver being identifiable at least in part by means of the respective group of multicast channels for that receiver.

2. The method of claim 1 wherein one version of each selected content portion is a modified version of that selected content portion.

3. The method of claim 2 wherein said one modified version of each selected content portion comprises a first watermarked version of that selected content portion using a first watermark.

4. The method of claim 3 wherein another version of each selected content portion comprises a second watermarked version of that selected content portion using a second watermark.

5. The method of any preceding claim wherein one version of each selected content portion is an unmodified original version of that selected content portion.

6. The method of any of claims 1 to 5 wherein the plurality of content portions consist of the selected content portions and other non-selected content portions, and wherein the method further comprises:
allocating the non-selected content portions to one or more multicast channels different from the multicast channels to which the versions of the selected content portions are allocated; and
providing each receiver with access to the one or more multicast channels to which the non-selected content portions are allocated.

7. The method of any of claims 1 to 5 wherein the plurality of content portions consist of the selected content portions and other non-selected content portions, and wherein the method further comprises:
allocating the non-selected content portions to those multicast channels to which the versions of a particular one of the selected content portions are allocated such that each non-selected content portion is allocated to two or more multicast channels.

8. The method of any preceding claim wherein all of the content portions are separated in time.

9. The method of any preceding claim wherein, for each selected content portion, each version of that selected content portion is allocated to a respective multicast channel different from multicast channels to which other versions of that selected content portion are allocated.

10. The method of claim 9 wherein the respective group of multicast channels for each receiver is such that the receiver is provided with access to only one version of each selected content portion, whereby each receiver is identifiable by means of the respective group of multicast channels for that receiver.

11. The method of any preceding claim further comprising:
allocating each version of each selected content portion to a multicast channel different from the multicast channels to which versions of other ones of the selected content portions are allocated.

12. The method of any preceding claim wherein each version of each selected content portion is randomly allocated to a respective multicast channel from a plurality of multicast channels.

13. The method of any preceding claim wherein the multicast channels are IP multicast channels.

14. The method of any preceding claim wherein at least one receiver comprises a group of sub-receivers.

15. The method of any preceding claim further comprising:
receiving the first piece of content from a content provider.

16. The method of any preceding claim further comprising:
allocating selected content portions of a second piece of content to at least a subset of the multicast channels to which the versions of the selected content portions of the first piece of content are allocated.

17. The method of claim 16 wherein, for each multicast channel of the subset of multicast channels, all of the selected content portions allocated to that multicast channel are separated in time.

18. The method of claim 16 or claim 17 wherein each selected content portion includes an identifier to indicate whether that selected content portion belongs to the first piece of content or to the second piece of content.

19. A multicast system arranged to carry out a method according to any preceding claim.

20. A computer program which, when executed by a processor, causes the processor to carry out the method of any of claims 1 to 18.

21. A data carrying medium carrying the computer program of claim 20.

22. The data carrying medium of claim 21, in which the data carrying medium is a storage medium or a transmission medium.

## Patentansprüche

1. Verfahren zum Verteilen eines ersten Teils von Inhalt (C1) an mehrere Empfänger (310) unter Verwendung von Multicast-Kanälen (340), wobei der erste Teil von Inhalt eine Mehrzahl von Inhaltsbereichen (C1P1, C1P2, C1P3, C1P4) umfasst, wobei das Verfahren umfasst:
für jeden einer Mehrzahl ausgewählter Inhaltsbereiche der Mehrzahl von Inhaltsbereichen, wobei es zwei oder mehr Versionen jedes solchen ausgewählten Inhaltsbereichs gibt, jede Version dieses ausgewählten Inhaltsbereichs einem entsprechenden Multicast-Kanal zuweisen (S802); und
jedem Empfänger Zugriff auf eine entsprechende Gruppe der Multicast-Kanäle bereitstellen (S803), wobei jeder Empfänger wenigstens teilweise mittels der entsprechenden Gruppe von Multicast-Kanälen für diesen Empfänger identifizierbar ist.

2. Verfahren nach Anspruch 1, wobei eine Version jedes ausgewählten Inhaltsbereichs eine modifizierte Version dieses ausgewählten Inhaltsbereichs ist.

3. Verfahren nach Anspruch 2, wobei die eine Version jedes ausgewählten Inhaltsbereichs eine erste mit einem Wasserzeichen versehene Version dieses ausgewählten Inhaltsbereichs umfasst, welche ein erstes Wasserzeichen verwendet.

4. Verfahren nach Anspruch 3, wobei eine andere Version jedes ausgewählten Inhaltsbereichs eine zweite mit einem Wasserzeichen versehene Version dieses ausgewählten Inhaltsbereichs umfasst, welche ein zweites Wasserzeichen verwendet.

5. Verfahren nach einem vorhergehenden Anspruch, wobei eine Version jedes ausgewählten Inhaltsbereichs eine unmodifizierte originale Version dieses ausgewählten Inhaltsbereichs ist.

6. Verfahren nach einem der Ansprüche 1 bis 5, wobei die Mehrzahl von Inhaltsbereichen aus den ausgewählten Inhaltsbereichen und anderen nicht ausgewählten Inhaltsbereichen besteht und wobei das Verfahren ferner umfasst:
die nicht ausgewählten Inhaltsbereiche einem oder mehreren Multicast-Kanälen zuweisen, welche sich von den Multicast-Kanälen unterscheiden, welchen die Versionen der ausgewählten Inhaltsbereiche zugewiesen werden; und
jedem Empfänger Zugriff auf den einen oder die mehreren Multicast-Kanäle bereitstellen, welchen die nicht ausgewählten Inhaltsbereiche zugewiesen werden.

7. Verfahren nach einem der Ansprüche 1 bis 5, wobei die Mehrzahl von Inhaltsbereichen aus den ausgewählten Inhaltsbereichen und anderen nicht ausgewählten Inhaltsbereichen besteht und wobei das Verfahren ferner umfasst:
die nicht ausgewählten Inhaltsbereiche denjenigen Multicast-Kanälen zuweisen, welchen die Versionen eines bestimmten der ausgewählten Inhaltsbereiche zugewiesen werden, so dass jeder nicht ausgewählte Inhaltsbereich zwei oder mehr Multicast-Kanälen zugewiesen wird.

8. Verfahren nach einem vorhergehenden Anspruch, wobei alle der Inhaltsbereiche zeitlich getrennt werden.

9. Verfahren nach einem vorhergehenden Anspruch, wobei für jeden ausgewählten Inhaltsbereich jede Version dieses ausgewählten Inhaltsbereichs einem entsprechenden Multicast-Kanal zugewiesen wird, welcher sich von Multicast-Kanälen unterscheidet, welchen andere Versionen dieses ausgewählten Inhaltsbereichs zugewiesen werden.

10. Verfahren nach Anspruch 9, wobei die entsprechende Gruppe von Multicast-Kanälen für jeden Empfänger derart ist, dass dem Empfänger Zugriff auf nur eine Version jedes ausgewählten Inhaltsbereichs bereitgestellt wird, wobei jeder Empfänger mittels der entsprechenden Gruppe von Multicast-Kanälen für diesen Empfänger identifizierbar ist.

11. Verfahren nach einem vorhergehenden Anspruch, ferner umfassend:
jede Version jedes ausgewählten Inhaltsbereichs einem Multicast-Kanal zuweisen, welcher sich von den Multicast-Kanälen unterscheidet, welchen Versionen anderer der ausgewählten Inhaltsbereiche zugewiesen werden.

12. Verfahren nach einem vorhergehenden Anspruch, wobei jede Version jedes ausgewählten Inhaltsbereichs einem entsprechenden Multicast-Kanal aus einer Mehrzahl von Multicast-Kanälen zufällig zugewiesen wird.

13. Verfahren nach einem vorhergehenden Anspruch, wobei die Multicast-Kanäle IP-Multicast-Kanäle sind.

14. Verfahren nach einem vorhergehenden Anspruch, wobei wenigstens ein Empfänger eine Gruppe von Sub-Empfängern umfasst.

15. Verfahren nach einem vorhergehenden Anspruch, ferner umfassend:
den ersten Teil von Inhalt von einem Inhaltsanbieter empfangen.

16. Verfahren nach einem vorhergehenden Anspruch, ferner umfassend:
ausgewählte Inhaltsbereiche eines zweiten Teils von Inhalt wenigstens einem Sub-Satz der Multicast-Kanäle zuweisen, welchen die Versionen der ausgewählten Inhaltsbereiche des ersten Teils von Inhalt zugewiesen werden.

17. Verfahren nach Anspruch 16, wobei für jeden Multicast-Kanal des Sub-Satzes von Multicast-Kanälen alle der ausgewählten Inhaltsbereiche, welche diesem Multicast-Kanal zugewiesen werden, zeitlich getrennt werden.

18. Verfahren nach Anspruch 16 oder 17, wobei jeder ausgewählte Inhaltsbereich einen Identifikator umfasst, um anzuzeigen, ob dieser ausgewählte Inhaltsbereich zu dem ersten Teil von Inhalt oder zu dem zweiten Teil von Inhalt gehört.

19. Multicast-System, welches dazu eingerichtet ist, ein Verfahren nach einem vorhergehenden Anspruch auszuführen.

20. Computerprogramm, welches, wenn es durch einen Prozessor ausgeführt wird, den Prozessor veranlasst, das Verfahren nach einem der Ansprüche 1 bis 18 auszuführen.

21. Datentragendes Medium, welches das Computerprogramm nach Anspruch 20 trägt.

22. Datentragendes Medium nach Anspruch 21, bei welchem das datentragende Medium ein Speichermedium oder ein Übertragungsmedium ist.

## Revendications

1. Procédé de distribution d'un premier élément de contenu (C1) à plusieurs récepteurs (310) en utilisant des canaux de multidiffusion (340), le premier élément de contenu comprenant une pluralité de parties de contenu (C1P1, C1P2, C1P3, C1P4), le procédé comprenant le fait :
pour chacune d'une pluralité de parties de contenu sélectionnées de la pluralité de parties de contenu, étant donné qu'il y a deux versions ou plus de chacune desdites parties de contenu sélectionnées, d'allouer (S802) chaque version de cette partie de contenu sélectionnée à un canal de multidiffusion respectif ; et
de fournir (S803) à chaque récepteur un accès à un groupe respectif des canaux de multidiffusion, chaque récepteur pouvant être identifié au moins en partie au moyen du groupe respectif de canaux de multidiffusion pour ce récepteur.

2. Procédé de la revendication 1, dans lequel une version de chaque partie de contenu sélectionnée est une version modifiée de cette partie de contenu sélectionnée.

3. Procédé de la revendication 2, dans lequel ladite version modifiée de chaque partie de contenu sélectionnée comprend une première version filigranée de cette partie de contenu sélectionnée en utilisant un premier filigrane.

4. Procédé de la revendication 3, dans lequel une autre version de chaque partie de contenu sélectionnée comprend une deuxième version filigranée de cette partie de contenu sélectionnée en utilisant un deuxième filigrane.

5. Procédé de l'une des revendications précédentes, dans lequel une version de chaque partie de contenu sélectionnée est une version originale non modifiée de cette partie de contenu sélectionnée.

6. Procédé de l'une des revendications 1 à 5, dans lequel la pluralité de parties de contenu consiste en les parties de contenu sélectionnées et d'autres parties de contenu non sélectionnées, et dans lequel le procédé comprend en outre le fait :
d'allouer les parties de contenu non sélectionnées à un canal ou à plusieurs canaux de multidiffusion différent(s) des canaux de multidiffusion auxquels sont allouées les versions des parties de contenu sélectionnées ; et
de fournir à chaque récepteur un accès au canal ou aux plusieurs canaux de multidiffusion auquel/auxquels sont allouées les parties de contenu non sélectionnées.

7. Procédé de l'une des revendications 1 à 5, dans lequel la pluralité de parties de contenu consiste en les parties de contenu sélectionnées et d'autres parties de contenu non sélectionnées, et dans lequel le procédé comprend en outre le fait :
d'allouer les parties de contenu non sélectionnées à ces canaux de multidiffusion auxquels sont allouées les versions d'une partie particulière des parties de contenu sélectionnées, de sorte que chaque partie de contenu non sélectionnée soit allouée à deux canaux de multidiffusion ou plus.

8. Procédé de l'une des revendications précédentes, dans lequel toutes les parties de contenu sont séparées dans le temps.

9. Procédé de l'une des revendications précédentes, dans lequel, pour chaque partie de contenu sélectionnée, chaque version de cette partie de contenu sélectionnée est allouée à un canal de multidiffusion respectif différent de canaux de multidiffusion auxquels sont allouées d'autres versions de cette partie de contenu sélectionnée.

10. Procédé de la revendication 9, dans lequel le groupe respectif de canaux de multidiffusion pour chaque récepteur est tel que le récepteur n'a accès qu'à une seule version de chaque partie de contenu sélectionnée, moyennant quoi chaque récepteur peut être identifié au moyen du groupe respectif de canaux de multidiffusion pour ce récepteur.

11. Procédé de l'une des revendications précédentes, comprenant en outre le fait :
d'allouer chaque version de chaque partie de contenu sélectionnée à un canal de multidiffusion différent des canaux de multidiffusion auxquels sont allouées des versions d'autres parties des parties de contenu sélectionnées.

12. Procédé de l'une des revendications précédentes, dans lequel chaque version de chaque partie de contenu sélectionnée est allouée de manière aléatoire à un canal de multidiffusion respectif d'une pluralité de canaux de multidiffusion.

13. Procédé de l'une des revendications précédentes, dans lequel les canaux de multidiffusion sont des canaux de multidiffusion IP.

14. Procédé de l'une des revendications précédentes, dans lequel au moins un récepteur comprend un groupe de sous-récepteurs.

15. Procédé de l'une des revendications précédentes, comprenant en outre le fait :
de recevoir le premier élément de contenu à partir d'un fournisseur de contenu.

16. Procédé de l'une des revendications précédentes, comprenant en outre le fait :
d'allouer des parties de contenu sélectionnées d'un deuxième élément de contenu à au moins un sous-ensemble des canaux de multidiffusion auxquels sont allouées les versions des parties de contenu sélectionnées du premier élément de contenu.

17. Procédé de la revendication 16, dans lequel, pour chaque canal de multidiffusion du sous-ensemble de canaux de multidiffusion, toutes les parties de contenu sélectionnées allouées à ce canal de multidiffusion sont séparées dans le temps.

18. Procédé de la revendication 16 ou 17, dans lequel chaque partie de contenu sélectionnée comporte un identifiant pour indiquer si cette partie de contenu sélectionnée appartient au premier élément de contenu ou au deuxième élément de contenu.

19. Système de multidiffusion agencé pour réaliser un procédé selon l'une des revendications précédentes.

20. Programme informatique qui, lorsqu'il est exécuté par un processeur, amène le processeur à réaliser le procédé de l'une des revendications 1 à 18.

21. Support de données portant le programme informatique de la revendication 20.

22. Support de données de la revendication 21, dans lequel le support de données est un support de stockage ou un support de transmission.
